# EUROPÄISCHE PATENTSCHRIFT

(11) **EP 3 925 747 B1**
(45) Veröffentlichungstag und Bekanntmachung des Hinweises auf die Patenterteilung: **29.11.2023**
(21) Anmeldenummer: 21174546.8
(22) Anmeldetag: 18.05.2021
(51) Int. Cl.: B28B 1/00, B32B 18/00, C04B 33/24, C04B 33/34, A47B 81/04, A47F 5/08, A47F 7/00, A47G 19/02, A47G 19/08, A47G 19/22, A47G 23/02

(54) **GESCHIRRTEIL UND VERFAHREN ZUR HERSTELLUNG EINES GESCHIRRTEILS**
TABLEWARE PART AND METHOD OF MANUFACTURING A TABLEWARE PART
ARTICLE DE VAISSELLE ET PROCÉDÉ DE FABRICATION D'UN ARTICLE DE VAISSELLE

(30) Priorität: 28.05.2020 DE 202020103062 U
(43) Veröffentlichungstag der Anmeldung: 22.12.2021
(73) Patentinhaber: Littl, Helmut, 89079 Ulm (DE)
(72) Erfinder: Littl, Helmut, 89079 Ulm (DE)
(74) Vertreter: Baumann, Rüdiger Walter

(56) Entgegenhaltungen:
- CN-A- 101 224 976
- CN-A- 107 287 546
- DE-A1- 2 829 440
- DE-U1-202010 007 581
- DE-U1-212011 100 010
- GB-A- 2 389 031
- US-A1- 2016 249 753

## Beschreibung

Geschirrteile, wie beispielsweise Teller, Tassen, Becher oder Schüsseln werden in der Regel in Schränken oder Regalen aufbewahrt. Dabei stellt sich insbesondere die Entnahme der jeweiligen Geschirrteile aus den Aufbewahrungsstellen als aufwändig dar, da nicht selten die Geschirrteile gestapelt vorgehalten werden und zur Entnahme eine Entstapelung erfolgen muss. Eine weitere Möglichkeit zur Aufbewahrung von Geschirrteilen stellt eine mit Haken versehene Leiste dar, an der die Geschirrteile aufgehängt werden. Dies setzt jedoch voraus, dass die Geschirrteile wenigstens ein Element aufweisen, das mit dem Haken in Eingriff gebracht werden kann. Beispielsweise bei Tellern oder Schüsseln ist dies oftmals nicht der Fall.

DE 28 29 440 A1 betrifft rutsch- und kippfestes Geschirr mit einem Metallelement, das in das Geschirr eingegossen, eingepresst oder eingesteckt ist. CN 101224976A zeigt ein einschichtiges, beidseitig mit einer Emaillierung überzogenes Geschirrteil.

Die vorliegende Erfindung hat sich zur Aufgabe gemacht, die Verfügbarkeit und Handhabung von Geschirrteilen wesentlich zu vereinfachen und einen leichten Zugriff auf die Geschirrteile zu ermöglichen.

Hierzu schlägt die Erfindung ein Geschirrteil vor, dass aus einer keramischen Masse gebildet ist. Die keramische Masse weist dabei eine Beigabe von ferromagnetischen Elementen auf, sodass die Möglichkeit besteht das Geschirrteil in einfacher Art und Weise an einer Magnetleiste oder einer sonstigen magnetischen Fläche bzw. einem Magneten zu befestigen und von dort schnell und einfach zu entnehmen. Im Interesse einer guten Verarbeitbarkeit des Ausgangsmaterials ist die keramische Masse bevorzugt ausgewählt aus der Gruppe umfassend Steingut, Ton, Keramiken, Porzellan, Untergruppen hiervon oder Mischungen daraus. Das die keramische Masse bildende Grundmaterial ist günstiger Weise ausgewählt aus Trockenmehl, Gießton, knetbarem Ton oder Keramikmasse. Zur Herstellung der keramischen Masse erfolgt eine Vermischung des Grundmaterials mit einer Flüssigkeit, in der Regel Wasser, die bei der Trocknung oder während des Brandes entweicht. Das keramische Material ist dabei bevorzugt zunächst fließfähig oder plastisch verformbar ausgebildet ist und härtet nach einem definierten Zeitintervall und unter Trocknungs- oder Brandbedingungen ganz oder teilweise aus.

Der Begriff keramische Massen, bezeichnet im Zusammenhang mit der vorliegenden Erfindung eine Vielzahl anorganischer nichtmetallischer Werkstoffe, die in die vorgenannten Typen unterteilt werden können. Die Erfindung umfasst sämtliche aus keramischen Massen geformten und gebrannten Produkte, die als Gebrauchs- und Ziergegenstände verwendet werden. Aus den keramischen Massen gefertigte Geschirrteile im Zusammenhang mit der vorliegenden Erfindung sind beispielsweise Gefäßkeramiken wie Tischgeschirr, Trinkgeschirr und Kochgeschirr.

Das Geschirrteil gemäß der Erfindung weist eine Wandung auf. Die Wandung des Geschirrteils hat dabei einen Aufbau aus mehreren, wenigstens drei keramischen Schichten, wenigstens eine Außenschicht, wenigstens eine Mittelschicht und wenigstens eine Innenschicht. Die Mittelschicht ist aus einer Mischung aus der keramischen Masse und ferromagnetischen Elementen gebildet. Die Mittelschicht vermittelt dem Geschirrteil ferromagnetische Eigenschaften. Die ferromagnetischen Elemente wurden bereits bei der Herstellung des Geschirrteils bzw. des Geschirrteilrohlings, d.h. vor der Trocknung bzw. dem Brand im Geschirrteil oder Geschirrteilrohling eingebracht. Diese erfolgte über Beimischung der ferromagnetischen Elemente, beispielsweise von ferromagnetischen Pulvern oder Granulaten in die keramische Masse. Eine nachträgliche Einlage aus oder von ferromagnetischem Material bzw. von ferromagnetischen Elementen erfolgt nicht. Außenschicht, Mittelschicht und Innenschicht sind stoffschlüssig miteinander verbunden.

Außenschicht, Mittelschicht und Innenschicht weisen in einer Ausführungsform im wesentlich über das gesamte Geschirrteil verteilt gleichmäßige Schichtdicken auf, die Ausformung der Schichten kann jedoch variieren. Die Dicke der Mittelschicht kann an die Anzahl, Anordnung und Ausformung der darin eingebrachten ferromagnetischen Elemente angepasst werden oder die ferromagnetischen Eigenschaften des Geschirrteils definieren.

In einer Ausführungsform ist die Mittelschicht parallel zur Außen- und Innenschicht ausgebildet. Alternativ kann die Mittelschicht in die Außen- und/oder die Innenschicht eingebettet vorgesehen werden.

In einer Weiterbildung des erfindungsgemäßen Geschirrteils ist vorgesehen, dass die Mittelschicht eine von der Außen- oder Innenschicht abweichende Flächengeometrie aufweist. Die Schichtdicke der Innenschicht kann dabei über eine Breite und/oder eine Höhe des Innenumfangs des Geschirrteils gesehen variieren. Auch können Bereiche mit höherer und geringerer Schichtdicke, verteilt über den Innenumfang des Geschirrteils oder Abschnitte davon vorgesehen werden. So kann beispielsweise die Mittelschicht bereichsweise konvexe Aufwölbungen aufweisen oder in einer bevorzugten Weiterbildung wellenförmig ausgebildet werden. Die Aussen- bzw. die Innenschicht umfassen dabei die Mittelschicht und ergänzen diese. In einer Weiterbildung der Erfindung, die ebenfalls als günstig angesehen wird, ist die Mittelschicht nur bereichs- oder abschnittsweise auf der Außenschicht aufgebracht und wird durch die nachfolgend aufbrachte Innenschicht vervollständigt.

Als günstig wird angesehen, wenn die Mittelschicht zwischen 20% und 70% des keramischen Materials und zwischen 30% und 80% der ferromagnetischen Elemente aufweist. Das Mischungsverhältnis kann dabei in Abhängigkeit von der Größe und dem Gewicht sowie dem letztlichen Einsatzzweck des Geschirrteils eingestellt werden. Die in die keramische Masse eingebrachten ferromagnetischen Elemente sind bevorzugt als Pulver, oder Granulate ausgebildet und weisen insbesondere eine gleichmäßige Verteilung in der keramischen Masse bzw. in der aus dieser gebildeten Mittelschicht auf. Hierdurch wird erreicht, dass unabhängig von der Ausrichtung oder Lage des Geschirrteils dieses stets mit einer magnetischen Fläche, einer magnetischen Leiste oder einem magnetischen Punkt verbindbar sind. Neben der gleichmäßigen Verteilung im gesamten Geschirrteil besteht selbstverständlich auch die Möglichkeit, dass Pulver, oder Granulate eine konzentrierte Verteilung an bestimmten Stellen oder in definierten Flächen oder Flächenbereichen das Geschirrteils aufweisen und somit einen oder mehrere Anordnungspunkt(e) im Geschirrteil bilden.

Die im Geschirrteil vorgesehenen, ferromagnetischen Elemente können in Ausführungsformen der Erfindung ganz oder teilweise in Form ferromagnetischen Pulvers zur Verfügung gestellt werden. Die Pulver weisen dabei bevorzugt eine Korngröße von zwischen 45 µm und 600 µm auf. Gleichermaßen ist es in Ausführungsformen der Erfindung vorgesehen, dass ferromagnetische Elemente in Form eines ferromagnetischen Granulats Verwendung finden. Das Granulat bzw. dessen Partikel weisen dabei bevorzugt eine Korngröße von zwischen 560 µm und 2500 µm auf. Selbstverständlich können auch Mischungen von Pulvern und Granulaten zum Einsatz kommen. Die im Zusammenhang mit der vorliegenden Erfindung genannten ferromagnetischen Elemente sind bevorzugt aus Eisen, Nickel, Kobalt, Neodym-Eisen-Bor oder Mischungen oder Legierungen aus diesen gebildet oder weisen einen entsprechenden Anteil an diesen auf, um eine stabile Magnetisierung und damit Anordnung an einem Halteelement sicherzustellen. Neben den vorgenannten eignen sich selbstverständlich sämtliche ferromagnetischen Elemente für die Verwendung in der vorliegenden Erfindung. Als vorteilhaft erweist es sich, wenn die ferromagnetischen Elemente zwischen 75% und 100 % Eisen, zwischen 0 % und 25% Kobalt, zwischen 0 % und 25% Nickel und/oder zwischen 0 % und 25% Neodym-Eisen-Bor aufweisen. Als vorteilhaft im Zusammenhang mit der vorliegenden Erfindung wird angesehen, wenn das Geschirrteil als Tasse, Teller, Becher, Schüssel oder Schale ausgebildet ist und somit aus der Gruppe der Gebrauchs- und Ziergegenstände ausgewählt ist. Selbstverständlich ist auch eine Ausbildung des Geschirrteils als Vase oder Schmuckgegenstand, auch umfassend Kunst- und Designgegenstände denkbar und gleichermaßen von der Erfindung umfasst.

Erfindungsgemäß wird eine Außenschicht und die wenigstens eine Innenschicht keine Beimischung ferromagnetischer Elemente aufweisen. Auf der Au-ßen- und/oder der Innenschicht kann zudem eine Glasur oder Farbschicht aufgetragen werden.

Ein definierter Anordnungspunkt des Geschirrteil wird dadurch zur Verfügung gestellt, dass die ferromagnetischen Elemente punkt-, band- oder linienförmig in einem Bereich einer Wandung des Geschirrteils angeordnet sind. Über die jeweilige Anordnung der ferromagnetischen Elemente kann somit die Ausrichtung des Geschirrteils beim Anbringen an einem Halteelement beeinflusst werden. Gegebenenfalls kann die Einbringung der ferromagnetischen Elemente auch als Ausgestaltungsmittel gewählt werden, um dem Nutzer anzuzeigen, in welcher Art und Weise er das Geschirrteil an einem Halteelement anbringen kann bzw. soll. Bevorzugt ist jedoch vorgesehen, dass die ferromagnetischen Elemente in der keramischen Masse plan eingebettet und überdeckt und somit nicht sichtbar sind.

Eine als günstig angesehene Ausführungsform des erfindungsgemäßen Geschirrteils sieht vor, dass die ferromagnetischen Elemente eine homogene Verteilung in der keramischen Masse aufweisen und somit eine ausrichtungsunabhängige Anordnung an einem Magneten oder einer magnetischen Fläche erfolgen kann.

Die ferromagnetischen Elemente werden bei der Herstellung der keramischen Masse bzw. deren Vorbereitung für den Ausformungsprozess des Geschirrteils in diese eingebracht. Dabei wird es als günstig angesehen, wenn das Mischungsverhältnis von keramischer Masse und ferromagnetischen Elementen von zwischen 1:1 und 1:10, bevorzugt zwischen 1:2 und 1:5 liegt.

Als günstig wird angesehen, wenn der Anteil an ferromagnetischen Elementen in der keramischen Masse bei zwischen 1 und 50% bevorzugt bei zwischen 15 und 35% liegt. Hierdurch wird sichergestellt, dass eine ausreichende Magnetkraft ausgebildet werden kann, die eine stabile Verbindung zwischen Geschirrteil und magnetischem Halteteil gewährleistet.

Bei der Herstellung des erfindungsgemäßen Geschirrteils erweist es sich als besonders vorteilhaft, wenn die Einbringung der ferromagnetischen Elemente in die keramische Ausgangs- oder Rohmasse erfolgt. Hierdurch wird sichergestellt, dass eine homogene Verteilung vorliegt und aus der so vorbehandelten Rohmasse dann ein Geschirrrohling, auch bezeichnet als Grünling, mit gleichmäßigen Magnetisierungseigenschaften erstellt werden kann. Alternativ hierzu besteht selbstverständlich auch die Möglichkeit, dass die ferromagnetischen Elemente erst nach der Ausbildung des Geschirrrohlings aus einer unbehandelten keramischen Masse jedoch vor dem Brennen in diesen eingebracht werden.

Als besonders vorteilhaft wird angesehen, wenn eine Einbringung der ferromagnetischen Elemente in das Geschirrteil vor dem Brand des Geschirrteilrohlings erfolgt. In diesem Fall kann durch Verteilung der ferromagnetischen Elemente im Geschirrteil bereits bei der Herstellung des Geschirrrohlings eine etwaige Veränderung im Verlauf des Brennprozesses berücksichtigt werden. Selbstverständlich ist auch die Einbringung der ferromagnetischen Elemente im Geschirrteil nach dem Brand möglich. Dieses erfolgt dann vor der Aufbringung einer Glasur, die in der Regel einem nochmaligen Brand des Geschirrteils vorgelagert ist. Auch hierdurch wird eine zufriedenstellende Einbettung bzw. Einbringung des ferromagnetischen Elementes im Geschirrteil sichergestellt.

Um zu erreichen, dass das Geschirrteil vollumfänglich und dauerhaft mit den ferromagnetischen Elementen beaufschlagt bleibt, wird es als günstig angesehen, wenn diese vollständig mit der keramischen Masse überdeckt sind.

Die Schmelzpunkte der ferromagnetischen Elemente sind bevorzugt so gewählt, dass diese oberhalb der Brenntemperatur der keramischen Massen legen. Eine Formänderung der ferromagnetischen Elemente während des Herstellungsprozesses des Geschirrteils tritt somit nicht auf.

Ebenfalls von der Erfindung umfasst ist ein Verfahren zur Herstellung eines drei Schichten aufweisenden Geschirrteils. Das Verfahren umfasst dabei wenigstens folgende Schritte und schließt die Verwendung einer Negativform für das fertige Geschirrteil ein:
(a) Beschichten einer Negativform des Geschirrteils mit der keramischen Masse zur Ausbildung einer ersten, die Außenschicht eines Geschirrrohteils bildenden Schicht,
(b) Beschichten der ersten Schicht mit wenigstens einer zweiten Schicht der keramischen Masse zur Ausbildung der Mittelschicht oder Mittelschichten des Geschirrrohteils,
(c) Beschichten der zweiten Schicht mit wenigstens einer dritten Schicht der keramischen Masse zur Ausbildung der Innenschicht oder Innenschichten des Geschirrrohteils.

Die Schichten werden insbesondere sukzessiv durch Gießen einer fließfähigen keramischen Masse oder durch Drehformen einer plastischen keramischen Masse gebildet. Die keramische Masse der Mittelschicht oder Mittelschichten weisen eine Beimischung von ferromagnetischen Elementen, eines ferromagnetischen Granulats und/oder ferromagnetischen Pulvers auf.

Die Schichten der im erfindungsgemäßen Verfahren hergestellten Geschirrteile werden bevorzugt mit einer Schichtdicke der Außenschicht von zwischen 0,2 mm und 4 mm, der Mittelschicht von zwischen 0,1 mm und 6 mm und/oder der Innenschicht eine Schichtdicke von zwischen 0,2 mm und 6 mm hergestellt. Die Schichten sind stoffschlüssig miteinander verbunden.

Eine bevorzugte Ausführungsform des Verfahrens sieht vor, dass zwischen den Schritten (a) und (b) sowie den Schritten (b) und (c) eine Ablagerung der keramischen Masse in der Form bis zur Ausbildung der für die jeweilige Schicht vorgesehenen Schichtdicke erfolgt.

Optional umfasst das Verfahren die Schritte:
(d) Trocknen des Geschirrrohteils,
(e) Entnahme des Geschirrrohteils aus der Negativform, und
(f) Brennen des Geschirrrohrteils.

Diese Schritte schließen sich an die zuvor beschriebenen Verfahrensschritte an, um das fertige, d.h. verwendungsbereite Geschirrteil zu bilden. In diesem Zusammenhang wird es als vorteilhaft angesehen, wenn zusätzlich die optionalen Schritte
(g) Aufbringen einer Glasur auf dem Geschirrrohteil, und
(h) Brennen der Glasur
vorgesehen werden. Durch die Glasur kann auch eine weitere Innen- oder Außenschicht des Geschirrteils ausgebildet werden. Ausführungsbeispiele für Herstellungsverfahren von Geschirrrohteile bzw. Formlingen (ohne Glasur) werden nachfolgend dargestellt.

### Ausführungsbeispiel 1: Gießverfahren

Verwendbar sind Gießverfahren mit keramischen Massen, die die ferromagnetischen Elemente in Form von für Granulaten, Pulvern und Pulvermischungen aufweisen, beinhalten oder umfassen. Herbei verwendet werden Negativformen, die als einteilige und zweiteilige Gießformen zur Verfügung gestellt werden.

Im dreiteiligen Guss werden wenigstens folgende, stoffschlüssig miteinander verbundene Schichten ausgebildet:
I. Schicht - Außenschicht des ungebrannten Geschirrrohteils (auch Formling genannt)
II. Schicht - ferromagnetische Mittelschicht des ungebrannten Geschirrrohteils
III. Schicht - Innenschicht (Innenseite) des ungebrannten Geschirrrohteils

### Gießen der Außenschicht:

Eine fließfähige Gießmasse (Ton, Keramische Masse, Porzellan, etc.) wird in eine Geschirrgießform, d. h. eine Negativform des zu fertigenden Geschirrteils eingegossen. Die Geschirrgießform wird vollständig mit der Gießmasse befühlt. Die Gießmasse bleibt solange in der Gießform bis eine Außenschicht von 0,2 bis 4 mm durch Erstarrung oder Absetzen des Materials in der Form entsteht. Dann wird der Rest der Gießmasse wieder aus der Form ausgeleert.

### Gießen der Mittelschicht:

Die ferromagnetischen Elemente beinhaltende Gießmasse (Mittelschichtmischung) wird in die verbleibende Füllfassung in die Geschirrgießform eingegossen. Die Befüllung bzw. Befüllungsgrad reicht dabei von 30% bis 100% der Füllfassung Geschirrgießform - abhängig vom Geschirrteil. Die ferromagnetischen Elemente beinhaltende Gießmasse bleibt solange in der Gießform bis eine Mittelschicht von 0,25 bis 6 mm entsteht. Dann wird der Rest der Gießmasse wieder aus der Form ausgeleert. Abhängig von der Form, dem Befüllungsgrad und der Dauer des Ausgießens kann eine gewünschte Mittelschichtform bzw. ein Schichtdickenverlauf der Mittelschicht hergestellt werden. Der Schichtdickenverlauf kann konstant - quasiparallel zur Außenschicht- in einer bestimmten Stärke von 0,25 bis 6 mm hergestellt werden. Ebenfalls abhängig von der Form, vom Befüllungsgrad und von der Dauer des Ausgie-ßens können Mittelschichtformen hergestellt werden, die keinen parallelen Formcharakter zur Außenschicht haben wie beispielsweise konvex-konkave bzw. konkav-konvexe Formen, langgezogene Wellenformen, Freifließformen, Bohnenformen, Tragflächenformen (doppelseitig), etc. mit Formstärken von 0,25 bis 6 mm. Die Wandstärke bzw. Schichtdicke ist abhängig von der Wahl der Aufhängepunkte, damit der magnetische Fluss (magnetisches Moment) mit der erforderlichen Konzentration die Haltkraft des Geschirrteils erreicht.

### Gießen der Innenschicht:

Gießmasse (Ton, Keramische Masse, Porzellan, etc.) wird in einer Geschirrgießform eingegossen. Die Geschirrgießform wird vollständig mit der Gießmasse befüllt. Die Gießmasse bleibt solange in der Gießform bis eine Innenschicht von 0,2 bis 6 mm entsteht. Dann wird der Rest der Gießmasse wieder aus der Form ausgeleert.

Nach dem Trocken kann das Geschirrrohteil aus der Form herausgenommen werden und für die verbleinde Schritte - Verputzen, Putzen, Stempeln, Schrühen (Schrühbrand), Glasieren, etc. zum Glasurbrand vorbereitet und dann der Glasurbrand durchgeführt werden.

### Ausführungsbeispiel 2: Vollquss-Gießformen

Vollguss-Gießformen werden bei Geschirrteilen vorwiegend zur Herstellung von Esstellern, Frühstückstellern, Servierplatten, Dekor- und Kunstgegenständen, unsymmetrischen Formen etc. verwendet. Sie bestehen in der Regel aus zwei Formteilen (Ober-oder Unterseite) die beim Gießen geschlossen werden.

Im dreiteiligen Guss werden wenigstens folgende, stoffschlüssig miteinander verbundene Schichten ausgebildet:
I. Schicht - Seite 1 (Ober- oder Unterseite, abhängig von der Form selber) des ungebrannten Geschirrrohteils
II. Schicht - ferromagnetische Schicht - Mittelschicht des ungebrannten Geschirrrohteils
III. Schicht - Seite 2 (Ober- oder Unterseite, abhängig von der Form selber) des ungebrannten Geschirrrohteils

### Gießen der Seite 1:

Gießmasse (Ton, Keramische Masse, Porzellan, etc.) wird in einer Vollguss-Gießform nur auf dem ersten Formteil eingegossen. Das erste Formteil der Vollguss-Gießform wird vollständig mit der Gießmasse befüllt. Die Gießmasse bleibt solange im ersten Formteil der Vollguss-Geschirrgießform bis eine Seite von 0,2 bis 4 mm entsteht. Dann wird der Rest der Gießmasse wieder aus dem Formteil ausgeleert.

### Gießen der Mittelschicht:

Die ferromagnetischen Elemente beinhaltende Gießmasse wird in die verbleibende Füllfassung des ersten Formteils der Vollguss-Gießform eingegossen. Die Befüllung bzw. der Befüllungsgrad reicht dabei von 15% bis 100% der Füllfassung der Gießform - abhängig von Geschirrteil.

Die ferromagnetischen Elemente beinhaltende Gießmasse bleibt so lange in dem ersten Formteil der Vollguss-Gießform bis eine Mittelschicht von 0,1 bis 6 mm entsteht. Dann wird der Rest der ferromagnetischen Elemente beinhaltenden Gießmasse wieder aus dem ersten Formteil der Gießform ausgeleert. Abhängig von der Form, dem Befüllungsgrad und der Dauer des Ausgießens kann eine gewünschte Form der Mittelschicht bzw. ein Schichtdickenverlauf der Mittelschicht hergestellt werden. Der Schichtdickenverlauf kann konstant - quasiparallel zur Außenschicht - in einer bestimmten Stärke von 0,1 bis 6 mm hergestellt werden. Ebenfalls abhängig von der Form, dem Befüllungsgrad und der Dauer des Ausgießens können Formen der Mittelschicht hergestellt werden, die keinen parallelen Formcharakter zur Seite 1 haben, wie beispielsweise konvex-konkave bzw. konkav-konvexe Formen, langgezogene Wellenformen, Freifließformen, Bohnenformen, Tragflächenformen (doppelseitig) etc. mit Formstärken von 0,1 bis 6 mm.

Die Wandstärke bzw. Schichtdicke ist auch abhängig von der Wahl der späteren Aufhängepunkte des Geschirrteils, damit der magnetische Fluss (Flussdichte) und magnetisches Moment die mit der erforderlichen Konzentration die Haltkraft / Haftkraft des Geschirrteils erreicht.

### Gießen der Seite 2 - Fertiggießen des Geschirrteils

Die Vollguss-Gießform - beide Formteile werden zusammengefügt -geschlossen und die Gießmasse (Ton, Keramische Masse, Porzellan, etc.) in die Vollgussform-Gießform eingegossen. Die Geschirrgießform wird vollständig mit der Gießmasse befüllt. Durch den Wasserentzug sinkt der Massespiegel an den Einfüllöffnungen und muss laufend aufgefüllt werden. Beim Vollguss wird die Wandstärke der Innenschicht vom Abstand der Formenteile zueinander bestimmt.

Nach dem Trocken kann das Geschirrrohteil aus der Form herausgenommen werden und für die verbleibenden Schritte - Verputzen, Putzen, Stempeln, Schrühen (Schrühbrand), Glasieren, etc. zum Glasurbrand vorbereitet und dann der Glasurbrand durchgeführt werden

### Ausführungsbeispiel 3: Keramik- und Ton-Drehen bzw. -Rollern

Wenigstens drei stoffschlüssig miteinander verbundene Schichten werden durch dreiteiliges Drehen bzw. Rollern ausgebildet:
I. Schicht - Außenschicht (Außenseite) des ungebrannten Geschirrrohteils (auch Formling genannt)
II. Schicht - ferromagnetische Schicht - Mittelschicht des ungebrannten Geschirrrohteils
III. Schicht - Innenschicht (Innenseite) des ungebrannten Geschirrrohteils

### Drehen / Rollern der Außenschicht:

Drehmasse - auch Hubel genannt - (Ton, Keramische Masse, Porzellan, etc.) wird in einer Drehform eingelegt. Durch Drehen der Drehform oder eines Rollenkopfes wird die Drehmasse unter Verwendung von Formgebungswerkzeugen (Drehformschablonen, Rollerköpfen, Rollerstempel, etc.) zu einem rotationssymmetrischen Gefäß ausgezogen bzw. geformt. Unter Berücksichtigung der Höhe bzw. Größe der Drehmasse und Art Formgebungswerkzeuge wird die Außenschicht mit einer Wandstärke von 0,2 bis 4 mm hergestellt.

### Drehen / Rollern der Mittelschicht:

Die ferromagnetischen Elemente beinhaltende Drehmasse (Mittelschichtmischung) wird in die Drehform die die bereits hergestellte Außenschicht aufweist eingelegt. Dann wird die Mittelschicht analog zum Verfahren der Außenschicht hergestellt unter Berücksichtigung der Höhe bzw. Größe der ferromagnetischen Drehmasse und die Art der Formgebungswerkzeuge für die Mittelschicht. Die Wandstärke der Mittelschicht liegt bei zwischen 0,1 bis 6 mm. Der Schichtdickenverlauf kann dabei konstant - quasiparallel zur Außenschicht - in einer Stärke von 0,1 bis 6 mm hergestellt werden, abhängig vom Formgebungswerkzeug. Auch beim Drehen können bedingt durch die Formgebungswerkzeuge unterschiedliche Formen - konvex-konkave bzw. konkav-konvexe Formen, langgezogene Wellenformen, Freifließformen, Bohnenformen, Tragflächenformen (doppelseitig), etc. mit Formstärken von 0,1 bis 6 mm erstellt werden.

### Drehen / Rollern der Innenschicht:

Das Drehen der Innenschicht erfolgt analog zur Außenschicht. Der Unterschied zur Außenschicht ist, dass bei der Innenschicht die Drehmasse eine unterschiedliche Größe haben kann und ein differenziertes Formgebungswerkzeug verwendet wird. Die Innenschicht wird in einer Stärke von 0,2 bis 6 mm hergestellt.

Anstelle einer Beaufschlagung des Ausgangsmaterials der Mittelschicht mit ferromagnetischen Elementen können ferromagnetische Elemente beispielsweise in Form von aus einem ferromagnetischen Material ausbildeten Scheiben, Bändern, Drähten, Drahtgeflechten oder Gittern in der Mittelschicht eingelegt oder in diese eingebettet werden.

Von eigenständiger erfinderischer Bedeutung ist ein in einem Verfahren wie zuvor beschreiben hergestelltes, bevorzugt gebranntes Geschirrteil, wobei eine Wandung des Geschirrteils wenigstens eine Außenschicht, eine Mittelschicht und eine Innenschicht aufweist und insbesondere die Innenschicht eine Beimischung von ferromagnetischen Elementen im keramischen Material aufweist.

Ein magnetisches Halterungssystem dient zur Anordnung wenigstens eines Geschirrteils wie zuvor beschrieben, wobei das magnetische Halterungssystem bevorzugt einen magnetischen Bereich, beispielsweise wenigstens eine Magnetschiene oder magnetische Fläche bzw. einen Magnetpunkt aufweist, an der oder dem das Geschirrteil anordenbar ist. Als günstig wird in diesem Zusammenhang angesehen, wenn der magnetische Bereich, beispielsweise das Halterungssystem und/oder die Magnetschiene bzw. Magnetfläche an einer im Wesentlichen horizontalen Fläche, beispielsweise einer Wand anordenbar ist.

Der magnetische Bereich stellt dabei bevorzugt eine Magnetisierungskraft zur Verfügung, die größer ist als die Gewichtskraft des Geschirrteils.

Als vorteilhaft wird angesehen, wenn der magnetische Bereich als Permanentmagnet ausgebildet ist und bevorzugt eine kubische, sphärische oder zylindrische Form aufweist.

Als besonders vorteilhaft erweist es sich im Zusammenhang mit der vorliegenden Erfindung, wenn der Permanentmagnet eine Güte von N30 bis N52 aufweist und der der magnetische Bereich insgesamt oder bereichsweise eine Haltekraft von zwischen 40 N und 0,3 kN zur Verfügung stellt.

Bevorzugt ist im Halterungssystem wenigstens ein definierter magnetischer Bereich zur Anordnung wenigstens eines Geschirrteils vorgesehen. Der oder die magnetische(n) Bereich(e) können sich mit nichtmagnetischen Bereichen abwechseln oder von diesen umgeben sein bzw. diese umgeben. Eine günstige Weiterbildung des erfindungsgemäßen Halterungssystems sieht vor, dass definierte Anordnungspunkte für das Geschirrteil vorgesehen sind. Diese Anordnungspunkte können dann mit den ferromagnetischen Elementen im Geschirrteil in Kontakt gebracht werden, sodass das Geschirrteil am gewünschten Ort haftet. Zur Entnahme des Geschirrteils muss dieses lediglich vom Anordnungspunkt bzw. der Magnetschiene oder magnetischen Fläche abgenommen und unmittelbar verwendet werden.

Durch die Zusammensetzung der keramischen Massen, die Verteilung ferromagnetischer Elemente, sowie der Magnetisierungskraft (magnetische Flussdichte, magnetische Induktion, Magnetkraft) der bevorzugt im Halterungssystem eingesetzten Permanentmagneten, ist die gesamte Gewichtskraft des Geschirrteils wesentlich geringer als die gesamte Magnetisierungskraft (Magnet /Geschirrteil). Die Magnetisierungskraft (Magnetisierung) bzw. das Magnetisierungsmoment oder auch Haltekraft des Magneten in Kombination mit den ferromagnetischen Elementen im Geschirrteil ist somit wesentlich größer als die Gewichtskraft des Geschirrteils selbst. So wird die gesamte Masse des Geschirrteils bei der Positionierung am Halterungssystem in Ruhe gehalten. Dabei ist zu beachten, dass es sich in einer bevorzugten Ausführungsform um handelsübliche Permanentmagnete handeln kann, die kubische, sphärische oder zylindrische Form aufweisen. Die Güte der Permanentmagnete liegt bei zwischen N30-N52. Tabelle 1 zeigt exemplarisch Attribute von in der Erfindung verwendbaren Magneten.

**Tab. 1 Attribute von in der Erfindung verwendbaren Magneten**

| Güte | Remanenz | | Koerzitivfeldstärke | | | | Energieprodukt | | max. Einsatztemp. |
|---|---|---|---|---|---|---|---|---|---|
| | Br | | bHc | | iHc | | (BxH)max | | |
| | Gauss (G) | Tesla (T) | kOe | kA/m | kOe | kA/m | MGOe | kJ/m³ | °C |
| N30 | 10800-11200 | 1.08-1.12 | 9.8-10.5 | 780-836 | ≥12 | ≥955 | 28-30 | 223-239 | ≤80 |
| N33 | 11400-11700 | 1.14-1.17 | 10.3-11 | 820-876 | ≥12 | ≥955 | 31-33 | 247-263 | ≤80 |
| N35 | 11700-12100 | 1.17-1.21 | 10.8-11.5 | 860-915 | ≥12 | ≥955 | 33-35 | 263-279 | ≤80 |
| N38 | 12200-12600 | 1.22-1.26 | 10.8-11.5 | 860-915 | ≥12 | ≥955 | 36-38 | 287-303 | ≤80 |
| N40 | 12600-12900 | 1.26-1.29 | 10.5-12.0 | 860-955 | ≥12 | ≥955 | 38-40 | 303-318 | ≤80 |
| N42 | 12900-13200 | 1.29-1.32 | 10.8-12.0 | 860-955 | ≥12 | ≥955 | 40-42 | 318-334 | ≤80 |
| N45 | 13200-13700 | 1.32-1.37 | 10.8-12.5 | 860-995 | ≥12 | ≥955 | 43-45 | 342-358 | ≤80 |
| N48 | 13700-14200 | 1.37-1.42 | 10.8-12.5 | 860-995 | ≥12 | ≥955 | 45-48 | 358-382 | ≤80 |
| N50 | 14000-14600 | 1.40-1.46 | 10.8-12.5 | 860-995 | ≥12 | ≥955 | 47-51 | 374-406 | ≤80 |
| N52 | 14200-14700 | 1.42-1.47 | 10.8-12.5 | 860-995 | ≥12 | ≥955 | 48-53 | 380-422 | ≤65 |

Aus den Attributen (Remanenz, Koerzitivfeldstärke, Energieprodukt) und den geometrischen Abmessungen der Permanentmagneten, lässt sich die erforderliche Haltekraft/Haftkraft der Permanentmagneten ableiten, die bevorzugt zwischen 40 N (ca. 4,5 kg) und 0,3 kN (ca. 30 kg) beträgt. Hierbei liegt der der Abstand von ferromagnetischen Elementen im Geschirrteil zum Permanentmagneten bei zwischen 0,2 und 7 mm ist.

Die Erfindung wird nachfolgend in Ausführungsbeispielen dargestellt. Es zeigt
- **Fig. 1a**: eine Ausführungsform des erfindungsgemäßen Geschirrteils als Tasse,
- **Fig. 1b**: eine weitere Ausführungsform des erfindungsgemäßen Geschirrteils als Tasse,
- **Fig. 2**: ein Halterungssystem mit daran angeordneten Geschirrteilen
- **Fig. 3a-g**: Ausführungsformen der im erfindungsgemäßen Geschirrteil ausgebildeten Schichten.

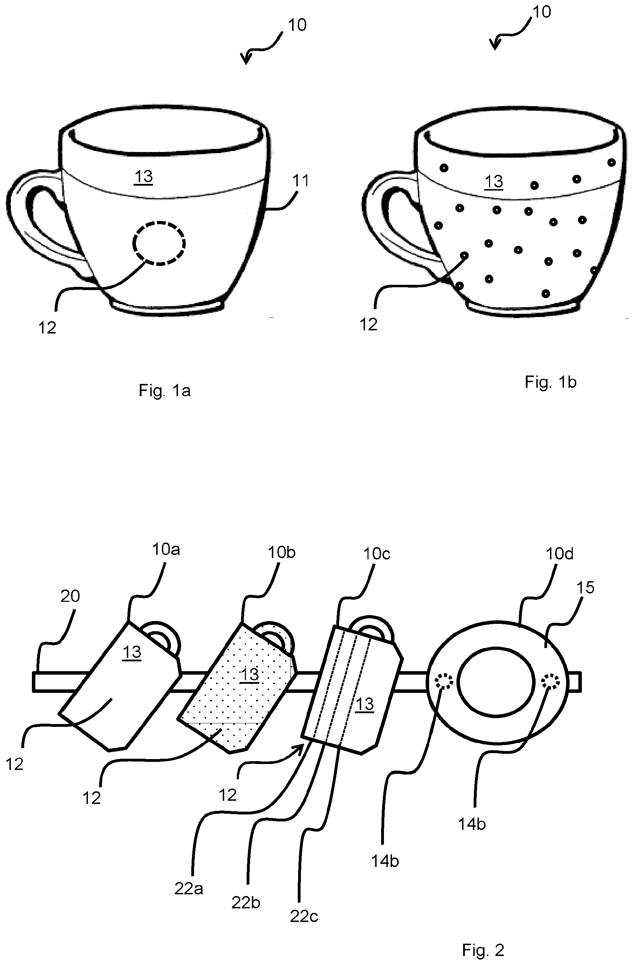

In Fig. 1a dargestellt ist eine Ausführungsform des erfindungsgemäßen Geschirrteils 10, hier als Tasse. Diese weist zentral in ihrer Umfangswand 11 angeordnet ein ferromagnetisches Element 12 auf, dass im Ausführungsbeispiel der Fig. 1a als Ring oder Scheibe ausgebildet ist. Das ferromagnetische Element 12 wurde nach der Herstellung des aus einer keramischen Masse gebildeten Grünlings oder Geschirrrohlings, in diesen eingesetzt. Nach dem Einsetzen des ferromagnetischen Elementes 12 wurde die Tasse gebrannt und somit das ferromagnetische Element 12 dauerhaft im Tassenkörper 13 festgelegt. Nach dem Brand erfolgt eine Glasur der Tasse, sodass das ferromagnetische Element 12 in der Tasse äußerlich nicht mehr sichtbar ist. Das ferromagnetische Element 12 dient im Ausführungsbeispiel zur Anordnung der Tasse beispielsweise an einer magnetischen Fläche bzw. einer Magnetleiste 20 (vergleiche Fig. 2). Fig. 1b zeigt eine weitere Ausführungsform eines Geschirrteils 10, ebenfalls in Form einer Tasse. Die ferromagnetischen Elemente 12 sind hier jedoch mehr oder weniger gleichmäßig über den gesamten Tassenkörper 13 verteilt angeordnet. Die für die Ausbildung der Tasse verwendete keramische Masse wurde vor der Herstellung des Rohlings der Tasse mit dem ferromagnetischen Material in Form von Partikeln oder Granulaten versetzt. Aus diesem Rohmaterial bzw. der mit den ferromagnetischen Elementen 12 versehenen keramischen Masse wurde dann die Tasse in einem Formgebungsprozess gebildet und letztlich gebrannt. Nach dem Brand des Rohlings wurde auch dieser mit einer Glasur überzogen, so dass die ferromagnetischen Elemente 12 an der fertigen Tasse nicht mehr sichtbar sind. Die solchermaßen hergestellte Tasse kann ebenfalls an einem Magneten bzw. einer Magnetleiste 20 befestigt werden. Hierbei ist es jedoch unerheblich in welcher Ausrichtung die Tasse angeordnet wird, da der gesamte Tassenkörper 13 ferromagnetische Elemente 12 enthält, daher vollflächig magnetisierbar ist und somit in jedweder Anordnungsposition an einem Magneten haftet.

Fig. 2 zeigt eine Magnetleiste 20 an der mehrere Geschirrteile 10a, b, c, d angeordnet sind. Dargestellt sind in Fig. 2 die verschiedenen Ausführungsformen des Geschirrteils 10a, b, c, d mit unterschiedlichen Anordnungen der ferromagnetische Elemente 12. Das erste Geschirrteil 10a, auch hier in Form einer Tasse, weist wie bereits im Zusammenhang mit Fig. 1a beschrieben einen einzigen eingelegten Metallring bzw. eine Metallscheibe auf. Dieser kontaktiert bei Anordnung des Geschirrteils 10a die Magnetleiste 20 und die Tasse haftet dann an diesem Punkt.

Das Geschirrteil 10b, ebenfalls eine Tasse, weist über den gesamten Tassenkörper 13 verteilt ferromagnetische Partikel auf. Somit kann die Tasse unabhängig von ihrer Anordnungsposition mit der Magnetleiste 20 in Kontakt gebracht werden und haftet in jeder Ausrichtung an dieser. Aufgrund des ferromagnetischen Materials im Tassenkörper 13 und dessen homogener Verteilung, kann das Geschirrteil 10b in besonders einfacher Art und Weise an der Magnetleiste 20 angebracht werden.

Das dritte Geschirrteil 10c weist ebenfalls ferromagnetische Elemente 12 auf. Diese sind als Drähte 22a, b, c im Tassenkörper 13 eingelegt. Die Drähte 22a, b, c werden nach der Herstellung des Geschirrteils 10c umfangsseitig in den noch ungebrannten Tassenkörper 13 eingelegt und erstrecken sich um den gesamten Tassenkörper 13 herum. Die Wandung des Geschirrteils 10c wird nach Einlegen der Drähte 22a, b, c geglättet, so dass diese an der Oberfläche nicht mehr erkennbar sind. Nach dem Brennen des Geschirrteils 10c und Auftragen der Glasur sind die ferromagnetische Elemente 12 nicht mehr sichtbar. Das Geschirrteil 10c kann somit ebenfalls in nahezu jedweder Ausrichtung an der Magnetleiste 20 angebracht werden und haftet dort sicher.

Das letzte in Fig. 2 dargestellte Geschirrteil 10d ist als Teller ausgebildet und weist insgesamt zwei Anordnungspunkte 14a, b auf, um an der Magnetleiste 20 zu haften. Die beiden Anordnungspunkte 14a, b sind so im Tellerkörper verteilt, dass eine ausgewogene und schwerpunktoptimierte Anordnung des Tellers an der Magnetleiste 20 erfolgen kann. Die beiden Anordnungspunkte 14a, b sind ebenfalls als Scheiben oder Ringe ausgebildet und an klar definierten Positionen im äußeren Umfangsring 15 des Tellers eingebracht. Dieser kann somit sicher an einer Magnetleiste 20 haften. Die Magnetleiste 20 wie in Fig. 2 dargestellt erlaubt das einfache Anbringen und Abnehmen der haftenden Geschirrteile 10a, b, c, d und hält diese sicher in ihrer Position.

Die Magnetleiste verfügt über magnetische Bereiche, die eine Magnetisierungskraft zur Verfügung stellen, die größer ist als die Gewichtskraft jedes einzelnen Geschirrteils 10. Im Ausführungsbeispiel wird der magnetische Bereich durch einen Permanentmagnet ausgebildet. Der Permanentmagnet weist eine Güte von N30 bis N52 auf und der der magnetische Bereich stellt insgesamt oder bereichsweise eine Haltekraft von zwischen 40 N und 0,3 kN zur Verfügung stellt. Im durch die Magnetleiste 20 gebildeten Halterungssystem ist ein definierter, länglicher magnetischer Bereich zur Anordnung der Geschirrteile 10a, b, c, d vorgesehen. Der magnetische Bereich definiert Anordnungspunkte für die Geschirrteile 10a,b,c,d die mit den ferromagnetischen Elementen in den Geschirrteilen 10a, b, c, d in Kontakt gebracht werden, sodass die Geschirrteile 10a, b, c, d am gewünschten Ort haften. Zur Entnahme der Geschirrteile 10a, b, c, d müssen diese lediglich vom Anordnungspunkt bzw. der Magnetschiene oder magnetischen Fläche abgenommen und unmittelbar verwendet werden.

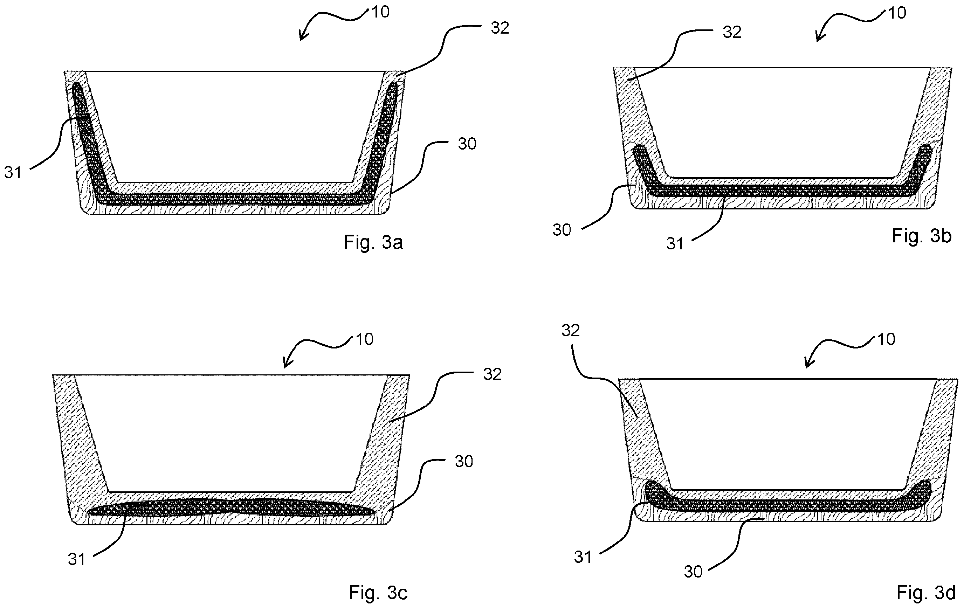

Die Figuren 3a bis 3g zeigen mögliche Ausführungsformen eines Geschirrteils 10 gemäß der Erfindung. Im Ausführungsbeispiel schematisch dargestellt ist eine Schale oder Tasse. Das Geschirrteil 10 verfügt über eine Wandung, die einen Aufbau aus mehreren, insbesondere drei Schichten 30, 31, 32 aufweist.

Das Geschirrteil 10 gemäß der Erfindung weist eine Wandung auf. Die Wandung des Geschirrteils 10 hat dabei einen Aufbau aus mehreren, insbesondere drei Schichten, und weist eine Außenschicht 30, eine Mittelschicht 31 und eine Innenschicht 32. Die Mittelschicht 31 ist in der Ausführungsform der Figuren 3a bis 3g aus einer Mischung aus der keramischen Masse und ferromagnetischen Elementen gebildet. Die Mittelschicht 31 vermittelt dem Geschirrteil 10 seine ferromagnetischen Eigenschaften. Die ferromagnetischen Elemente wurden bereits bei der Herstellung des Geschirrteils 10 bzw. des Geschirrteilrohlings, d.h. vor der Trocknung bzw. dem Brand im Geschirrteil 10 oder Geschirrteilrohling eingebracht. Diese erfolgte über Beimischung der ferromagnetischen Elemente, beispielsweise von ferromagnetischen Pulvern oder Granulaten in die keramische Masse. Eine nachträgliche Einlage aus oder von ferromagnetischem Material bzw. von ferromagnetischen Elementen ist nicht erfolgt. Außenschicht 30, Mittelschicht 31 und Innenschicht 32 sind stoffschlüssig miteinander verbunden.

Außenschicht 30, Mittelschicht 31 und Innenschicht 32 weisen in der Ausführungsform gemäß Fig. 3a im Wesentlich über das gesamte Geschirrteil verteilt gleichmäßige Schichtdicken auf. Wie aus den Figuren 3b bis 3g ersichtlich, kann die und Ausformung der Schichten jedoch auch variieren. Die Dicke der Mittelschicht 31 kann an die Anzahl, Anordnung und Ausformung der darin eingebrachten ferromagnetischen Elemente angepasst werden oder die ferromagnetischen Eigenschaften des Geschirrteils 10 definieren.

In Fig. 3a ist die Mittelschicht 31 parallel zur Außen- und Innenschicht 30, 32 ausgebildet. In den Fig. 3b bis 3g ist Mittelschicht 31 in die Außen- und/oder die Innenschicht 30, 32 eingebettet vorgesehen.

In Fig. 3b erstreckt sich die Mittelschicht 31 nur über einen Teil der Höhe des Geschirrteils 10, weist jedoch insgesamt die gleiche Schichtdicke auf.

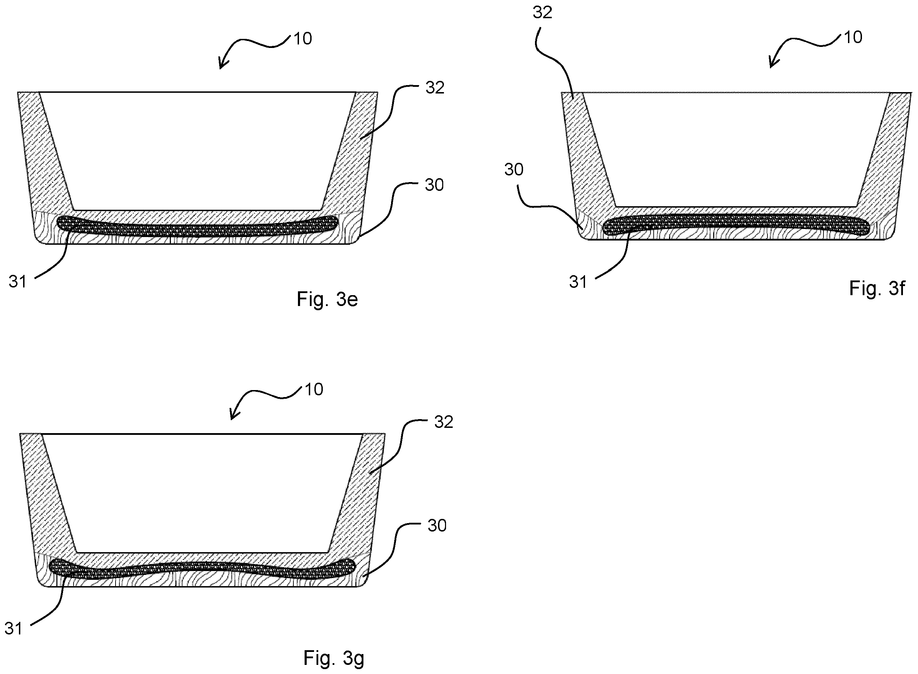

In den Figuren 3c bis 3g ist die Mittelschicht 31 mit von der Außen- bzw. Innenschicht 30, 32 abweichenden Flächengeometrien dargestellt. Die Schichtdicke der Innenschicht 31 variiert über die Breite und/oder Höhe des Innenumfangs des Geschirrteils 10 gesehen. In Fig. 3c, 3d und 3g sind Bereiche mit höherer und geringerer Schichtdicke, verteilt über den Innenumfang des Geschirrteils 10 oder Abschnitte davon vorgesehen. Figur 3e zeigt eine Mittelschicht 31 mit einer gegenüber der Innenschicht 32 gesehen konvexen Aufwölbung, während die Aufwölbung in Figur 3f konkav ausgebildet ist. Figur 3g zeigt eine wellenförmig ausgebildete Mittelschicht 31. Figuren 3c und 3d Mittelschichten mit unterschiedlichen Schichtdicken, verteilt über die gesamte Mittelschicht 31. Die Mittelschicht 31 ist in den Ausführungsformen der Figuren 3b bis 3g nur bereichs- oder abschnittsweise auf der Außenschicht 30 aufgebracht und wird jeweils durch die nachfolgend aufbrachte Innenschicht 32 vervollständigt bzw. umschlossen.

Aufgrund der Geometrie, der Masseverteilung und dem Abstand zum Magneten, ist in den gezeigten Ausführungsformen jeweils ein unterschiedliches magnetisches Moment vorhanden. Somit ist auch die Haltekraft an den unterschiedlichen Stellen verschieden und es besteht die Möglichkeit alle Geschirrformen mit dem jeweiligen Schwerpunkt, Trägheitsmoment, etc. mit handelsüblichen Magneten zu halten bzw. an diesen zu positionieren.

Die Figuren zeigen nur einen exemplarischen Ausschnitt möglicher Ausformungen der Mittelschicht 31. Sämtliche Ausführungsformen können in den zuvor beschriebenen Verfahren hergestellt werden, d.h. in Gieß-, Vollguss-Gießform oder Dreh- bzw. Rollerverfahren. Abhängig von der Form, dem Befüllungsgrad und der Dauer des Ausgie-ßens der jeweiligen Gießformen kann die gewünschte Form der Mittelschicht 31 bzw. ein Schichtdickenverlauf der Mittelschicht 31 hergestellt werden, um so verschiedene geometrische Ausformungen zu realisieren.

## Patentansprüche

1. Geschirrteil aus einer keramischen Masse, **dadurch gekennzeichnet, dass** eine Wandung des Geschirrteils einen Aufbau aus drei keramischen Schichten, ausgebildet als wenigstens eine Außenschicht, wenigstens eine Mittelschicht und wenigstens eine Innenschicht, aufweist, wobei die Mittelschicht aus einer Mischung aus der keramischen Masse und ferromagnetischen Elementen gebildet ist, wobei die ferromagnetischen Elemente ausgewählt sind aus ferromagnetischem Granulat, ferromagnetischem Pulver, oder Mischungen daraus und die ferromagnetischen Elemente der keramischen Masse beigemischt und homogen in dieser verteilt sind, wobei die wenigstens eine Außenschicht und die wenigstens eine Innenschicht keine Beimischung ferromagnetischer Elemente aufweisen.

2. Geschirrteil nach Anspruch 1, **dadurch gekennzeichnet, dass** die Schichten stoffschlüssig miteinander verbunden sind.

3. Geschirrteil nach Anspruch 1 oder 2, **dadurch gekennzeichnet, dass** die keramische Masse ausgewählt ist aus der Gruppe umfassend Steingut, Ton, Keramiken, Porzellan, Untergruppen hiervon oder Mischungen daraus.

4. Geschirrteil nach einem der Ansprüche 1 bis 3, **dadurch gekennzeichnet, dass** die Schichten gleiche oder unterschiedliche Schichtdicken aufweisen, wobei die Außenschicht bevorzugt eine Schichtdicke von zwischen 0,2 mm und 4 mm, die Mittelschicht bevorzugt eine Schichtdicke von zwischen 0,1 mm und 6 mm und die Innenschicht bevorzugt eine Schichtdicke von zwischen 0,2 mm und 6 mm aufweist, wobei die Mittelschicht insbesondere parallel zur Außen- oder Innenschicht ausgebildet oder in die Außen- und/oder die Innenschicht eingebettet ist oder die Mittelschicht eine von der Außen- oder Innenschicht abweichende Flächengeometrie aufweist, insbesondere wobei die Schichtdicke über eine Breite und/oder Höhe des Innenumfangs des Geschirrteils gesehen variiert oder Bereiche mit höherer und geringerer Schichtdicke vorgesehen sind,
wobei die Mittelschicht bevorzugt bereichsweise konvexe Aufwölbungen aufweist oder wellenförmig ausgebildet ist oder
die Mittelschicht nur bereichs- oder abschnittsweise auf der Außenschicht aufgebracht ist.

5. Geschirrteil nach einem der vorhergehenden Ansprüche, **dadurch gekennzeichnet, dass** die Mittelschicht zwischen 20% und 70% des keramischen Materials und zwischen 30% und 80% der ferromagnetischen Elemente aufweist und/oder das keramische Material fließfähig oder plastisch verformbar ausgebildet ist und nach einem definierten Zeitintervall ganz oder teilweise aushärtet und/oder wobei das die keramische Masse bildende Grundmaterial insbesondere ausgewählt ist aus Trockenmehl, Gießton, knetbarem Ton oder Keramikmasse.

6. Geschirrteil nach Anspruch 1, **dadurch gekennzeichnet, dass** das ferromagnetische Pulver eine Korngröße von zwischen 45 µm und 600 µm aufweist und/oder das ferromagnetische Granulat eine Korngröße von zwischen 560 µm und 2500 µm aufweist, und/oder wobei die ferromagnetischen Elemente aus einer Mischung aus Eisen, Kobalt, Nickel, Neodym-Eisen-Bor oder Legierungen daraus bestehen oder diese umfassen und/oder die ferromagnetischen Elemente zwischen 75% und 100 % Eisen, zwischen 0 % und 25% Kobalt, zwischen 0 % und 25% Nickel und/oder zwischen 0 % und 25% Neodym-Eisen-Bor aufweisen.

7. Geschirrteil nach einem der vorhergehenden Ansprüche, **dadurch gekennzeichnet, dass** das Geschirrteil insbesondere als Tasse, Teller, Becher, Schüssel oder Schale ausgebildet ist.

8. Geschirrteil nach einem der vorhergehenden Ansprüche, **gekennzeichnet, durch** ein Mischungsverhältnis von keramischer Masse und ferromagnetischen Elementen von zwischen 1:1 und 1:10, bevorzugt zwischen 1:2 und 1:5, wobei der Anteil an ferromagnetischen Elementen in der keramischen Masse insbesondere bei zwischen 1 und 50% bevorzugt bei zwischen 15 und 35 % liegt und/oder wobei bevorzugt eine vollständige Überdeckung der ferromagnetischen Elemente mit der keramischen Masse.

9. Verfahren zur Herstellung eines drei Schichten aufweisenden Geschirrteils, umfassend die Schritte:
(a) Beschichten einer Negativform des Geschirrteils mit der keramischen Masse zur Ausbildung einer ersten, die Außenschicht eines Geschirrrohteils bildenden Schicht,
(b) Beschichten der ersten Schicht mit wenigstens einer zweiten Schicht der keramischen Masse zur Ausbildung der Mittelschicht oder Mittelschichten des Geschirrrohteils,
(c) Beschichten der zweiten Schicht mit wenigstens einer dritten, Schicht der keramischen Masse zur Ausbildung der Innenschicht oder Innenschichten des Geschirrrohteils,
wobei die Schichten insbesondere sukzessive durch Gießen einer fließfähigen keramischen Masse oder drehformen einer plastischen keramischen Masse gebildet werden und die keramische Masse der Mittelschicht oder Mittelschichten eine Beimischung eines ferromagnetischen Granulats und/oder ferromagnetischen Pulvers aufweist.

10. Verfahren nach Anspruch 9, **dadurch gekennzeichnet, dass** die Außenschicht eine Schichtdicke von zwischen 0,2 mm und 4 mm, die Mittelschicht eine Schichtdicke von zwischen 0,1 mm und 6 mm und/oder die Innenschicht eine Schichtdicke von zwischen 0,2 mm und 6 mm aufweist und/oder wobei zwischen den Schritten (a) und (b) sowie den Schritten (b) und (c) bevorzugt eine Ablagerung der keramischen Masse in der Form bis zur Ausbildung der für die jeweilige Schicht vorgesehenen Schichtdicke erfolgt.

11. Verfahren nach einem der Ansprüche 9 oder 10, optional umfassend die Schritte:
(d) Trocknen des Geschirrrohteils,
(e) Entnahme des Geschirrrohteils aus der Negativform, und
(f) Brennen des Geschirrrohrteils und/oder
optional umfassend die Schritte:
(g) Aufbringen einer Glasur auf dem Geschirrrohteil, und
(h) Brennen der Glasur.

## Claims

1. Tableware part made of a ceramic mass, **characterised in that** a wall of the tableware part has a structure of three ceramic layers, formed as at least one outer layer, at least one middle layer and at least one inner layer, the middle layer being formed from a mixture of the ceramic mass and ferromagnetic elements, wherein the ferromagnetic elements are selected from ferromagnetic granules, ferromagnetic powder or mixtures thereof and the ferromagnetic elements are admixed with the ceramic mass and homogeneously distributed therein, wherein the at least one outer layer and the at least one inner layer have no admixture of ferromagnetic elements.

2. Tableware part according to claim 1, **characterised in that** the layers are joined to one another in a materially bonded manner.

3. Tableware part according to claim 1 or 2, **characterized in that** the ceramic mass is selected from the group comprising earthenware, clay, ceramics, porcelain, subgroups thereof or mixtures thereof.

4. Tableware part according to any one of claims 1 to 3, **characterized in that** the layers have the same or different layer thicknesses, the outer layer preferably having a layer thickness of between 0.2 mm and 4 mm, the middle layer preferably having a layer thickness of between 0.1 mm and 6 mm and the inner layer preferably having a layer thickness of between 0.2 mm and 6 mm, wherein the middle layer is formed in particular parallel to the outer or inner layer or is embedded in the outer and/or the inner layer or the middle layer has a surface geometry which deviates from the outer or inner layer, in particular with the layer thickness varying as seen over a width and/or height of the inner circumference of the tableware part, or regions with a higher and lower layer thickness being provided, the middle layer preferably having convex bulges in regions or being of undulating design, or the middle layer being applied to the outer layer only in regions or in sections.

5. Tableware part according to one of the preceding claims, **characterised in that** the middle layer comprises between 20% and 70% of the ceramic material and between 30% and 80% of the ferromagnetic elements and/or in that the ceramic material is flowable or plastically deformable and hardens completely or partially after a defined time interval and/or wherein the base material forming the ceramic mass is selected in particular from dry flour, casting clay, kneadable clay or ceramic mass.

6. Tableware part according to claim 1, **characterized in that** the ferromagnetic powder has a grain size of between 45 µm and 600 µm and/or the ferromagnetic granules have a grain size of between 560 µm and 2500 µm, and/or wherein the ferromagnetic elements consist of or comprise a mixture of iron, cobalt, nickel, neodymium-iron-boron or alloys thereof and/or the ferromagnetic elements comprise between 75% and 100% iron, between 0% and 25% cobalt, between 0% and 25% nickel and/or between 0% and 25% neodymium-iron-boron.

7. Tableware part according to one of the preceding claims, **characterised in that** the tableware part is formed in particular as a cup, plate, mug, bowl or dish.

8. Tableware part according to one of the preceding claims, **characterized by** a mixing ratio of ceramic mass and ferromagnetic elements of between 1:1 and 1:10, preferably between 1:2 and 1:5, wherein the proportion of ferromagnetic elements in the ceramic mass is in particular between 1 and 50%, preferably between 15 and 35%, and/or preferably by a complete covering of the ferromagnetic elements with the ceramic mass.

9. Method of manufacturing a three-layered piece of tableware comprising the steps of:
(a) coating a negative mould of the tableware part with the ceramic composition to form a first layer forming the outer layer of a raw tableware part,
(b) coating the first layer with at least a second layer of the ceramic composition to form the middle layer or middle layers of the raw tableware part,
(c) coating the second layer with at least a third layer of the ceramic mass to form the inner layer or inner layers of the raw tableware part, wherein the layers are formed in particular successively by casting a flowable ceramic mass or by rotationally moulding a plastic ceramic mass and the ceramic mass of the middle layer or middle layers has an admixture of a ferromagnetic granulate and/or ferromagnetic powder.

10. Method according to claim 9, **characterized in that** the outer layer has a layer thickness of between 0.2 mm and 4 mm, the middle layer has a layer thickness of between 0.1 mm and 6 mm and/or the inner layer has a layer thickness of between 0.2 mm and 6 mm and/or wherein between the steps (a) and (b) as well as the steps (b) and (c) preferably a deposition of the ceramic mass in the mould takes place until the layer thickness provided for the respective layer is formed.

11. Method according to any one of claims 9 or 10, optionally comprising the steps of:
(d) Drying the raw tableware part,
(e) removing the raw tableware part from the negative mould; and
(f) firing the raw tableware part, and/or
optionally comprising the steps of:
(g) applying a glaze to the raw tableware part, and
(h) firing the glaze.

## Revendications

1. Article de vaisselle fabriquée à partir d'une masse céramique, **caractérisée en ce qu'**une paroi de la pièce de vaisselle présente une structure à trois couches céramiques, constituée d'au moins une couche extérieure, d'au moins une couche intermédiaire et d'au moins une couche intérieure, la couche intermédiaire étant formée d'un mélange de masse céramique et d'éléments ferromagnétiques, les éléments ferromagnétiques étant choisis parmi des granulés ferromagnétiques, des poudres ferromagnétiques ou des mélanges de ceux-ci, et les éléments ferromagnétiques étant mélangés à la masse céramique et répartis de manière homogène dans celle-ci, la couche extérieure au moins et la couche intérieure au moins n'étant pas mélangées à des éléments ferromagnétiques.

2. Article de vaisselle selon la revendication 1, **caractérisée en ce que** les couches sont reliées l'une à l'autre par une liaison matérielle.

3. Article de vaisselle selon la revendication 1 ou 2, **caractérisée en ce que** la masse céramique est choisie de la groupe comprenant la faïence, l'argile, la céramique, la porcelaine, leurs sous-groupes ou leurs mélanges.

4. Article de vaisselle selon l'une des revendications 1 à 3, **caractérisée en ce que** les couches ont des épaisseurs identiques ou différentes, la couche extérieure ayant de préférence une épaisseur comprise entre 0,2 mm et 4 mm, la couche intermédiaire ayant de préférence une épaisseur comprise entre 0,1 mm et 6 mm et la couche intérieure ayant de préférence une épaisseur comprise entre 0,2 mm et 6 mm, la couche intermédiaire étant notamment formée parallèlement à la couche extérieure ou intérieure ou étant noyée dans la couche extérieure et/ou intérieure, ou la couche intermédiaire présentant une géométrie de surface différente de celle de la couche extérieure ou intérieure, notamment avec une épaisseur de couche variable sur une largeur et/ou une hauteur de la circonférence intérieure de la pièce de vaisselle, ou des régions présentant une épaisseur de couche plus élevée et plus faible, la couche intermédiaire présentant de préférence des renflements convexes dans certaines régions ou étant de forme ondulée, ou la couche intermédiaire étant appliquée sur la couche extérieure uniquement dans certaines régions ou sections.

5. Article de vaisselle selon l'une des revendications précédentes, **caractérisée en ce que** la couche intermédiaire comprend entre 20 et 70 % du matériau céramique et entre 30 et 80 % des éléments ferromagnétiques et/ou par le fait que le matériau céramique est fluide ou plastiquement déformable et durcit totalement ou partiellement après un intervalle de temps défini et/ou par le fait que le matériau de base formant la masse céramique est choisi en particulier parmi la farine sèche, l'argile de coulée, l'argile pétrissable ou la masse céramique.

6. Article de vaisselle selon la revendication 1, **caractérisée en ce que** la poudre ferromagnétique a une taille de grain comprise entre 45 µm et 600 µm et/ou que les granulés ferromagnétiques ont une taille de grain comprise entre 560 µm et 2500 µm, et/ou **en ce que** les éléments ferromagnétiques consistent en un mélange de fer, de cobalt, de nickel, de néodyme-fer-bore ou d'alliages de ces éléments et/ou les éléments ferromagnétiques comprennent entre 75 % et 100 % de fer, entre 0 % et 25 % de cobalt, entre 0 % et 25 % de nickel et/ou entre 0 % et 25 % de néodyme-fer-bore.

7. Article de vaisselle selon l'une des revendications précédentes, **caractérisée en ce que** la pièce de vaisselle se présente notamment sous la forme d'une tasse, d'une assiette, d'un mug, d'un bol ou d'un plat.

8. Article de vaisselle selon l'une des revendications précédentes, **caractérisée par** un rapport de mélange de masse céramique et d'éléments ferromagnétiques compris entre 1:1 et 1:10, de préférence entre 1:2 et 1:5, la proportion d'éléments ferromagnétiques dans la masse céramique étant notamment comprise entre 1 et 50 %, de préférence entre 15 et 35 %, et/ou de préférence par un recouvrement complet des éléments ferromagnétiques par la masse céramique.

9. Procédé de fabrication d'un article de vaisselle à trois couches comprenant les étapes suivantes
(a) revêtir un moule négatif de l'article de vaisselle avec la composition céramique pour former une première couche formant la couche extérieure d'un article de vaisselle brute,
(b) recouvrir la première couche d'au moins une deuxième couche de composition céramique pour former la ou les couches intermédiaires de l'article de vaisselle brute,
(c) revêtir la deuxième couche d'au moins une troisième couche de masse céramique pour former la ou les couches intérieures de l'article de vaisselle brute,
les couches étant notamment formées successivement par coulage d'une masse céramique fluide ou par rotomoulage d'une masse céramique plastique, et la masse céramique de la ou des couches intermédiaires est mélangée à des granulés ferromagnétiques et/ou à de la poudre ferromagnétique.

10. Procédé selon la revendication 9, **caractérisé en ce que** la couche extérieure a une épaisseur comprise entre 0,2 mm et 4 mm, la couche intermédiaire a une épaisseur comprise entre 0,1 mm et 6 mm et/ou la couche intérieure a une épaisseur comprise entre 0,2 mm et 6 mm et/ou **en ce qu'**entre les étapes (a) et (b) ainsi que les étapes (b) et (c) un dépôt de la masse céramique dans le moule a lieu de préférence jusqu'à ce que l'épaisseur de la couche prévue pour la couche respective soit formée.

11. Procédé selon l'une quelconque des revendications 9 ou 10, comprenant optionnellement les étapes suivantes:
(d) Séchage de l'article de vaisselle brute,
(e) retirer l'article de vaisselle brute du moule négatif ; et
(f) cuisson de l'article de vaisselle brute, et/ou
optionnellement les étapes suivantes:
(g) application d'une glaçure sur l'article de vaisselle brute et
(h) cuisson de la glaçure.
